# EUROPEAN PATENT APPLICATION

(11) **EP 0 698 369 A1**
(43) Date of publication of application: **28.02.1996**
(21) Application number: 95112970.9
(22) Date of filing: 17.08.1995
(51) Int. Cl.: A47L 13/17, C09K 3/22

(54) **Dust-controlling composition**

(30) Priority: 23.08.1994 JP 233964/94
(71) Applicant: JOHNSON COMPANY, LIMITED, Oisomachi Naka-gun Kanagawa-ken (JP)
(72) Inventor: Kikuchihara, Norihiro, Chigasaki-shi, Kanagawa-ken (JP)
(74) Representative: Ruschke, Hans Edvard, Dipl.-Ing.

(57) **Abstract**

A dust-controlling composition, characterized by the fact that the dust-controlling composition contains as its principal ingredient a solution made of 30-90 weight percent of C₂₋₁₀ polyhydric alcohol and 70-10 weight percent of water. The dust-controlling composition of this invention is excellent with respect to lightness of mop, finish feel, endurance of the effect, and washability. It can be used effectively in cleaning the floor.

## Description

### Field of the Invention

This invention pertains to an aqueous dust-controlling composition that is characterized by the fact that it improves one's ability to clean dust from surfaces and the composition has little tendency to yellow or otherwise discolor a floor surface being dusted.

### Background Art

At present, the operation of cleaning the floors in plants, offices, shops, gymnasiums, office buildings, etc., is usually performed by using mops to remove dust from the floors. Various types of dust-controlling compositions are now used for mopping in the operation of cleaning floors.

When a mop is used to clean the floor by means of a dust-controlling composition, the following four basic conditions have to be met.

(1) As manual labor is usually used to clean away the dust, the cleaning operation should be light and the operability (ease of use) should be high. (2) The ability of the floor to be cleaned should be good after the dust cleaning operation. (3) The mop that uses the dust-controlling composition should be able to be used repeatedly, with a long-lasting cleaning effect. (4) After using the dust mop in cleaning the floor, it should be possible to wash the contaminated mop easily. In particular, it should be possible to use water to wash the mop easily.

However, there is as yet no dust-controlling composition that can meet all of these four requirements.

For example, when water is used to perform the mopping operation, as the mop is heavy and human labor is used, operability (ability to use the mop) becomes poor. Also, after the floor is cleaned by the mop, the floor surface remains wet. As people walk on it, traces are left on the floor. The floor becomes slippery and is easily contaminated. Consequently, it is necessary to dry the floor surface. However, it takes time to dry the floor surface, and it may be needed to wipe off the water. Also, the mop using water becomes bulky, and the cleaning effectiveness of the mop cannot be maintained.

On the other hand, when an organic solvent or mineral oil is used in the dust cleaning operation, the mop is light, the operability is good, and it is possible to use it repeatedly with a long-lasting cleaning effect. However, an oil film is nevertheless left on the surface of the floor, and it cannot be removed as easily as water. Consequently, the floor surface is slippery, and it may be contaminated easily. In addition, the oil film is prone to discoloration or yellowing, and the appearance of the floor surface after cleaning becomes degraded. For the dust-controlling composition using an organic solvent or mineral oil, as the oil is sticky, there is an uneasy feeling in the operation, and it is tedious to perform the washing operation after the cleaning operation. These are disadvantages.

Also, when water-soluble monoalcohols, such as lower alcohols, are used, as the vapor pressure is high, the working environment is poor. In addition, the long-lasting effect after cleaning is doubtful. Also, when higher monoalcohols are used, as the vapor pressure is too low, the higher monoalcohol component is left for a long time on the surface of the floor. Consequently, the finish feel is poor. As explained above, when monoalcohols alone are used, it is difficult to realize a good working environment, a long-lasting effect, and excellent finish feel.

### Summary Disclosure of the Invention

This invention provides a dust-controlling composition which can meet the following requirements at the same time: operability, finish feel of the floor surface during cleaning, long-lasting effect, and the washing property.

In order to realize the aforementioned purpose, the present inventors have performed extensive research. As a result of this research work, it was found that the aforementioned four requirements can be met at the same time by a combination of polyhydric alcohol and water with a composition in a prescribed range. In this way, this invention was reached.

That is, this invention provides a type of dust-controlling composition, characterized by the fact that the dust-controlling composition contains as its principal ingredient a solution made of, as dust controlling agent, 30-90 weight percent of polyhydric alcohol and the balance comprising 70-10 weight percent of water.

### Modes for Carrying Out the Invention

The types of the polyhydric alcohols that can be used as the dust controlling agent in this invention are preferably those having from 2 to 10 carbon atoms per molecule and which are highly miscible with water. Specific examples include polyhydric alcohols that are liquid at room temperature such as polyhydric alcohols containing from 2 to 6 carbon atoms per molecule such as ethylene glycol, propylene glycol, diethylene glycol, dipropylene glycol, and glycerin, which may be used either alone or as a mixture of two or more types.

According to this invention, the ratio of the polyhydric alcohol to water is particularly important. In order to obtain a good finish feel and long-lasting effect, the amount of the polyhydric alcohol should be in the range of 30-90 weight percent, or preferably in the range of 40-80 weight percent, or more preferably in the range of 50-70 weight percent. If the content of the polyhydric alcohol is smaller than 30 weight percent, the operability and finish feel are not good enough, and the cleaning effect cannot last. On the other hand, when the content of the polyhydric alcohol is larger than 90 weight percent, while the operability is good, the finish feel is nevertheless poor. This is also undesirable.

The solution made of 30-90 weight percent of polyhydric alcohol and 70-10 weight percent of water may also further contain nonionic surfactant, cationic surfactant, anionic surfactant, amphoteric surfactant, and other well-known surfactants, as well as additives such as a bactericide, fungicide, perfume, etc., to form the desired dust-controlling composition.

### Industrial Applicability

The dust-controlling composition of this invention is excellent with respect to lightness of mop, finish feel, endurance of the effect, and washability. It can be used effectively in cleaning floors in plants, offices, shops, gymnasiums, office buildings, etc.

In the following, this invention will be explained in more detail with reference to application examples and comparative examples. For the dust-controlling composition, an evaluation is performed with respect to the following four items.

### (1) Operability, lightness of mop

The lightness of the mop soaked with the dust-controlling composition and used in performing the operation of cleaning floors, etc., was evaluated with five grades of 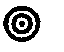 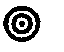 , ○, □, △, X, in order of decreasing weight. Grades 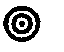 - ○ correspond to the case when the mop is light and the operation can be performed easily. On the other hand, grades △ - X correspond to the case when the mop is heavy and the operability is poor.

### (2) Finish feel

After the floor is cleaned by a mop soaked with the dust-controlling composition, the finish feel of the floor, such as the effectiveness of removal of dirt from the floor, is evaluated with five grades of 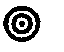 , ○, □, △, X, in order of decreasing finish feel.

### (3) Endurance of effect

When the mop soaked with the dust-controlling composition is used continuously, an evaluation is made of the ability of the mop to adsorb the dirt from the floor, with the endurance evaluated in five grades of 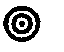 , ○, □, △, X, in order of decreasing endurance (ability to absorb dirt).

### (4) Washability

After the mop soaked with the dust-controlling composition is used continuously and has dust and dirt adsorbed on it, it is dipped in a washing solution, and the ability to remove the dust and dirt is evaluated in five grades of 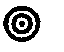 , ○, □, △, X, in order of decreasing dust/dirt/removal ability.

### Application Examples 1-8 and Comparative Examples 1-6

Table I lists the results for Application Examples 1-8, with compositions 1-8 of the solution, and Comparative Examples 1-6, with compositions 1-6 of the solution, respectively. For each solution, the aforementioned evaluation methods were adopted, with the Application Example results listed in Table I and the Comparitive Example results listed in Table II.

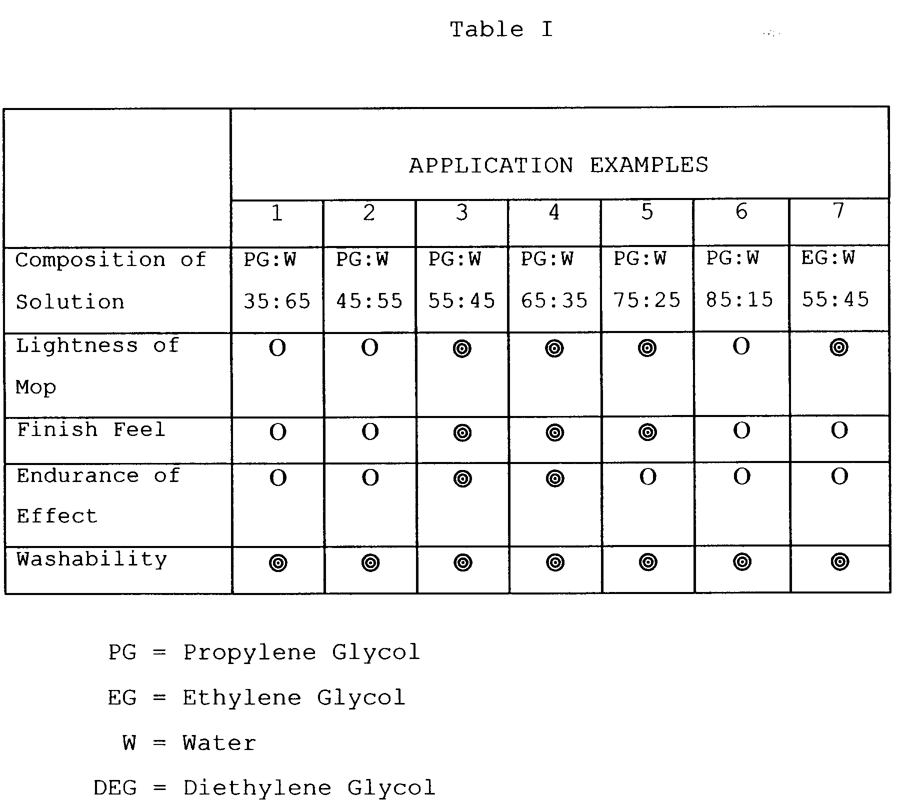

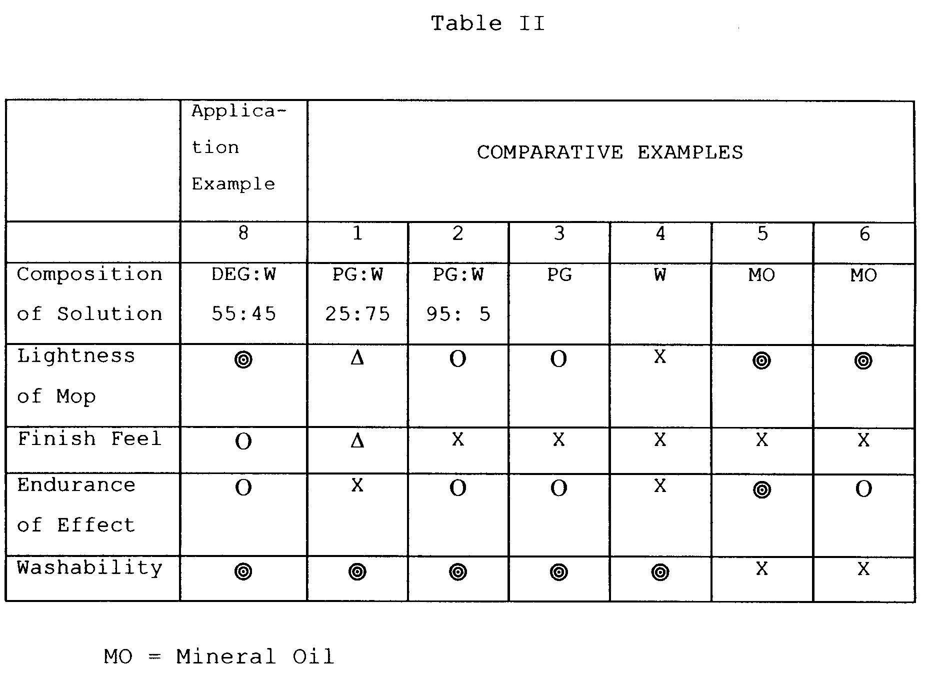

As can be seen from Table I, the solution of the dust-controlling composition of this invention is excellent with respect to the lightness of mop, finish feel, endurance of the effect, and washability. It can be used effectively in cleaning floors.

## Claims

1. A dust-controlling composition, characterized by a dust-controlling agent that comprises from 30-90 weight percent of the composition of at least one polyhydric alcohol containing from about 2 to 10 carbon atoms per molecule and the balance of the composition comprises from 70-10 weight percent of water.

2. The dust-controlling composition described in Claim 1 wherein the polyhydric alcohol is selected from the group consisting of ethylene glycol, propylene glycol, diethylene glycol, dipropylene glycol, and glycerin.

3. The dust-controlling composition described in Claim 2 wherein the polyhydric alcohol comprises 40-80 weight percent of the composition.

4. The dust-controlling composition described in Claim 2 wherein the polyhydric alcohol comprises 50-70 weight percent of the composition.

5. The dust-controlling composition described in Claim 1 wherein the ratio of the polyhydric alcohol to water is in the range of 50-70:50-30 weight percent of the composition.

6. The dust-controlling composition described in Claim 2 wherein the ratio of the polyhydric alcohol to water is in the range of 50-70:50-30 weight percent of the composition.

7. The dust-controlling composition described in Claim 3 wherein the ratio of the polyhydric alcohol to water is in the range of 50-70:50-30 weight percent of the composition.

8. The dust-controlling composition described in Claim 4 wherein the ratio of the polyhydric alcohol to water is in the range of 50-70:50-30 weight percent of the composition.

9. The dust-controlling composition described in Claim 7, wherein the polyhydric alcohol is selected from the group consisting of ethylene glycol and propylene glycol.

10. The dust-controlling composition described in Claim 8, wherein the polyhydric alcohol is selected from the group consisting of ethylene glycol and propylene glycol.
